(19) Europäisches Patentamt
European Patent Office
Office européen des brevets

(11) EP 1 842 592 A1

(12) **EUROPÄISCHE PATENTANMELDUNG**

(43) Veröffentlichungstag:
**10.10.2007 Patentblatt 2007/41**

(51) Int Cl.:
***B01J 47/00*** *(2006.01)* ***B01J 39/20*** *(2006.01)*
***B01J 41/14*** *(2006.01)* ***B01D 15/36*** *(2006.01)*

(21) Anmeldenummer: **06112215.6**

(22) Anmeldetag: **04.04.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **METROHM AG**
**9100 Herisau (CH)**

(72) Erfinder:
- **Raskop, Michael**
  **9100 Herisau (CH)**
- **Seubert, Andreas**
  **35043 Marburg (DE)**
- **Grimm, Andreas**
  **95936 Frankfurt (DE)**

(74) Vertreter: **Hepp, Dieter et al**
**Hepp, Wenger & Ryffel AG,**
**Friedtalweg 5**
**9500 Wil (CH)**

(54) **Ionenaustauschmaterial, Ionenaustauschsäule und Herstellungsverfahren**

(57) Die Erfindung betrifft Ionenaustauschmaterialien, umfassend ein hydrophobes Trägerharz mit aufgepfropften Seitenketten, wobei die Seitenketten Ionenaustauschgruppen umfassen und die Seitenketten insgesamt eine tensidartige Struktur aufweisen. Durch die tensidartige Struktur wird eine regiospezifische und besonders gleichmässige Anordnung der Seitenketten auf dem Trägerharz erzielt, die zudem eine hervorragende und einheitliche Hydratation der Ionenaustauschgruppen ermöglicht. Dies zeigt sich insbesondere in verbesserten Signalasymmetrien für Bromid und Nitrat.

**Fig. 1:**

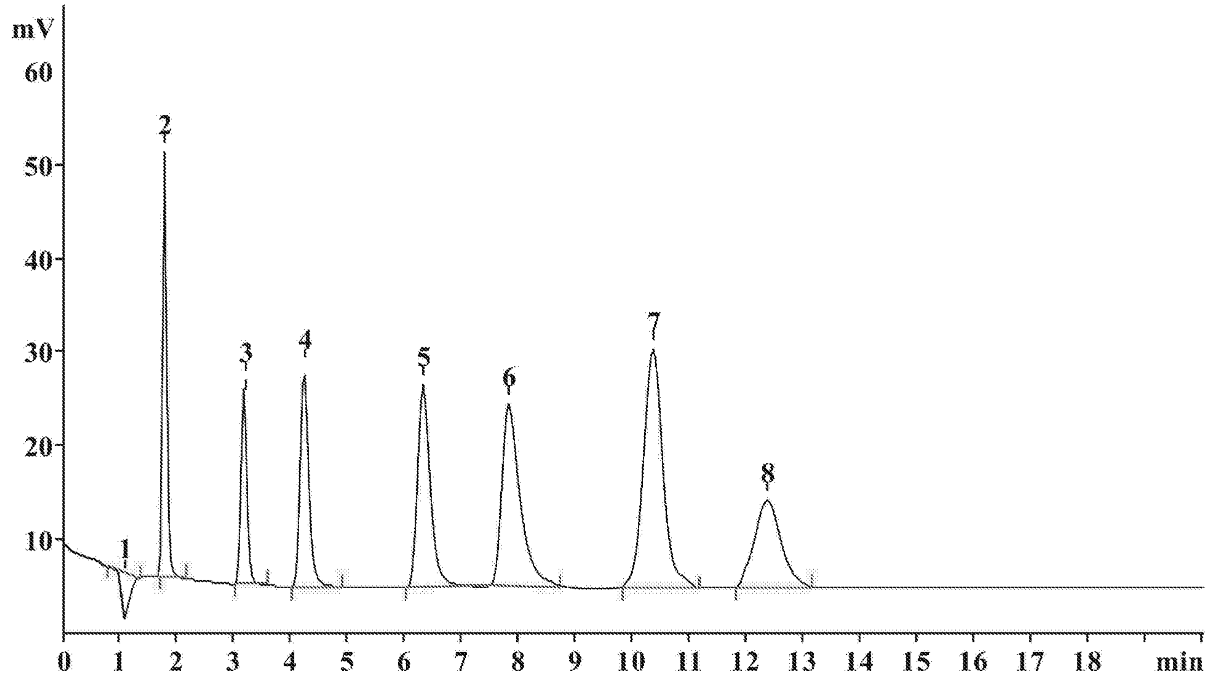


EP 1 842 592 A1

## Beschreibung

Die Erfindung betrifft das Gebiet der insbesondere partikelförmigen Ionenaustauschmaterialien sowie deren Herstellung.

Ionenaustauschmaterialien können auf einem Trägerharz aufgebaut werden, welches mit negativ geladenen Gruppen (sog. Kationenaustauschgruppen) oder auch positiv geladenen Gruppen (sog. Anionenaustauschgruppen) funktionalisiert ist. Die Funktionalisierung eines Styrol-Divinylbenzol-Copolymerharzes mit Sulfonatgruppen erfolgt bspw. in gängiger Praxis durch Behandlung mit $SO_3$. Auf diese funktionalisierten Trägerharzpartikel werden Ionenaustauschmaterialien über ionische Wechselwirkungen fixiert, welche über Ladungen verfügen, die der Funktionalisierung der Trägerharzpartikel entgegengesetzt sind. So sind im Stand der Technik bspw. Anionenaustauschmaterialien bekannt, welche auf mit (negativ geladenen) Sulfonatgruppen modifizierten Trägerharzpartikeln aufgebaut sind, auf welchen Anionenaustauschmaterialien mit (positiv geladenen) Anionenaustauschgruppen über ionische Wechselwirkung fixiert sind.

Bekannt sind weiter die oberflächenfunktionalisierten Ionenaustauschmaterialien. Diese sind erhältlich durch Präfunktionalisierung des Trägerharzes, wobei die Präfunktion anschliessend in die eigentliche Ionenaustauschfunktion umgewandelt wird.

Die Herstellung der Ionenaustauschmaterialien erfolgt derzeit mit hochreaktiven Reagenzien in konzentrierten Suspensionen. Die solchermassen erhältlichen Ionenaustauschmaterialien zeigen zumeist eine hohe Signalasymmetrie für z.B. leicht polarisierbare Anionen, die nachteilig ist und nur unzureichend erklärt werden kann.

Es ist daher eine Aufgabe der Erfindung, die Nachteile des bekannten zu vermeiden, insbesondere also die Bereitstellung von verbesserten Ionenaustauschmaterialien mit insbesondere partikelförmigen Kunstharz-Trägermaterialien zu ermöglichen.

Diese Aufgabe wird gelöst durch ein Ionenaustauschmaterial sowie ein Verfahren zur Herstellung eines solchen Ionenaustauschmaterials gemäss den unabhängigen Patentansprüchen.

Ein Ionenaustauschmaterial gemäss der Erfindung umfasst ein hydrophobes Trägerharz mit aufgepfropften Seitenketten, welche Seitenketten insbesondere hydrophile Ionenaustauschgruppen umfassen, und wobei die Seitenketten eine tensidartige Struktur aufweisen.

Eine tensidartige Struktur umfasst mindestens eine hydrophile und eine hydrophobe funktionelle Gruppe. Hydrophiler und hydrophober Teil müssen hierbei derart aufeinander abgestimmt sein, dass eine Ausrichtung an der Grenzfläche zwischen wässriger Phase und der anderen (festen, flüssigen oder gasförmigen) Phase (hier: dem hydrophoben Trägerharz) ermöglicht ist.

Überraschenderweise wurde gefunden, dass durch die tensidartige Struktur der Seitenketten eine Regioselektivität und Belegungsdichte bei der Verankerung dieser Seitenketten auf dem Trägerharz erreicht werden kann, die herkömmlichen Ionenaustauschmaterialien überlegen ist. Es zeigt sich, dass die tensidartige Struktur eine Ausrichtung der Seitenketten vor der Aufpfropfung ermöglicht, die sehr homogen ist. Das hydrophobe Trägerharz (wie bspw. Polystyrol-Divinylbenzol-Copolymerisate) wird von dem tensidartigen Reagenz benetzt, jedoch nicht in dichtester Packung. Die tensidartigen Moleküle sind bestrebt, sich so weit voneinander zu entfernen, bis die elektrostatische Abstossung der gleich geladenen Moleküle an Wirkung verliert. Dies führt zu einer sehr regelmässigen Verteilung der tensidartigen Moleküle auf dem Trägermaterial. Zudem zeigt sich, dass die tensidartigen Moleküle kaum in die Porenstruktur des Trägermaterials eindringen und dort verankern. Sowohl durch die Nichtnutzung der Poren, als auch dadurch, dass die Seitenketten nicht in dichtester Packung arrangiert sind, ist zudem eine gleichmässige und recht vollständige Hydratation der Ionenaustauschgruppen ermöglicht, die sich insbesondere auch in einer niedrigeren Signalasymmetrie äussert.

Pfropfpolymerisation bietet gegenüber anderen aus dem Stand der Technik bekannten Verfahren zum Bereitstellen von bspw. Sulfonat-Gruppen auf einem Trägerharz durch Reaktion mit $SO_3$ den grossen Vorteil der leichten Kontrollierbarkeit der durch den Belegungsgrad resultierenden Ionenaustauschkapazität. Bei der Pfropfpolymerisation werden vorzugsweise Monomere an vorgefertigte Polymere anpolymerisiert; die Monomere weisen hierbei bereits die gewünschte Ionenaustauschfunktionalität auf, bspw. eine Sulfonatgruppe (bzw. ein Sulfonsäuresalz), so dass keine nachfolgende Umwandlung nach der Pfropfung mehr notwendig ist. Durch die Pfropfung wird eine gegenüber konventionellen Verfahren zur Einführung von Ionenaustauschgruppen unterschiedliche sterische Umgebung der Austauschgruppe erzeugt, die zudem noch in weitem Bereich durch gezielte Auswahl des Pfropfungsreagenzes insbesondere im hydrophoben Teil (Struktur, Kettenlänge etc.) variiert werden kann.

In besonders bevorzugten Ausführungsformen umfasst oder besteht das Trägerharz aus Polymeren, welche ausgewählt sind aus der Gruppe bestehend aus Styrol-Divinylbenzol-Copolymeren; Divinylbenzol-Acrylsäure-Copolymeren; Polyacrylaten und/oder Polymethacrylaten; Amin-Epichlorhydrin-Copolymeren; Pfropfpolymeren von Styrol auf Polyethylen und/oder Polypropylen; Poly(2-chlormethyl-1,3-butadien; Poly(vinylaromaten)-Harzen insbesondere auf der Basis von Styrol, alpha-Methylstyrol, Chlorstyrol, Chlormethylstyrol, Vinyltoluol, Vinylnaphtalin, Vinylpyridin; Aminoplasten; Cellulosen; Polyvinylalkoholen, Phenol-Formaldehyd-Harzen.

Besonders bevorzugt sind Styrol-Divinylbenzol-Copolymere; hierbei kann der Divinylbenzolgehalt und damit der Vernetzungsgrad des Trägerharzes in weitem Bereich variiert werden. Derartige Trägerharze und deren Herstellung

sind dem Fachmann bekannt, bspw. aus US 5,324,752 und EP 883 574; die Beschreibung dieser Dokumente hinsichtlich der Trägerharze wird hiermit durch Bezugnahme in die Offenbarung eingeschlossen.

Vorzugsweise weist die Seitenkette einen hydrophoben Teil mit einer aromatischen Struktureinheit auf. Das Verhältnis der in den hydrophoben Teilen der Seitenketten vorhandenen aromatischen Struktureinheiten zu der Anzahl der hydrophilen Bereiche, insbesondere zu der Anzahl der Ionenaustauschgruppen in den hydrophilen Bereichen ist vorzugsweise ≥ 1, insbesondere ≥ 2, ≥ 3 oder ≥ 4. Unter einem hydrophilen Bereich wird bei einer einzigen Ionenaustauschgruppe je Seitenkette eben diese Ionenaustauschgruppe verstanden. Jedoch können auch eine Mehrzahl von Ionenaustauschgruppen in diesem hydrophilen Bereich vorhanden sein. Generell können selbstverständlich auch mehrere Verankerungsstellen auf dem Trägerharz je Seitenkette vorgesehen sein. Weiter vorzugsweise umfasst die Seitenkette eine aromatische Struktureinheit, welche ausgewählt ist aus der Gruppe bestehend aus Benzylderivaten, Naphtylderivaten, Biphenylderivaten.

In weiteren bevorzugten Ausführungsformen weist die Seitenkette einen hydrophoben Teil mit einer insbesondere aliphatischen Kohlenstoffkette von ≥ 6 Kohlenstoffatomen, vorzugsweise von ≥ 8 Kohlenstoffatomen, besonders bevorzugt von ≥ 10 Kohlenstoffatomen auf. Diese aliphatische Kohlenstoffkette kann insbesondere zusätzlich zu aromatischen Struktureinheiten in der Seitenkette vorgesehen sein, oder auch insbesondere bei Kettenlängen von ≥ 10 Kohlenstoffatomen alleine den hydrophoben Teil der Seitenkette bilden.

Gemäss einer weiteren bevorzugten Ausführungsform ist das Trägerharz aus einem Polymer gebildet, welches seitenständige, ungesättigte Gruppen, insbesondere Vinylgruppen aufweist. Derartige ungesättigte Gruppen sind bevorzugte Pfropfungssubstrate für die Seitenketten mit den Ionenaustauschgruppen.

Die aufgepfropften Seitenketten können hierbei selbst Polymere sein. So kann bspw. ein Block(co)polymer mit einer Vinylfunktion, mit einer oder mehreren Ionenaustauschgruppen und einem oder mehreren hydrophoben Bereichen verwendet werden. Alternativ kann auch mit vinylgruppenhaltigen, tensidartigen Monomeren, die eine Ionenaustauschgruppe aufweisen, eine polymere Seitenkette erzeugt werden.

Weiter bevorzugt ist das Trägerharz partikelförmig, bei mittleren Partikeldurchmessern im Bereich von 2 bis 100 μm, vorzugsweise 3 bis 25 μm, besonders bevorzugt 4 bis 10 μm.

Es hat sich gezeigt, dass mit Anionenaustauschmaterialien gemäss der Erfindung ohne weiteres eine Signalasymmetrie $A_S$ für Bromid und Nitrat von ≤ 2 erreicht werden kann und/oder die Elution von Fluorid nicht mit dem Totvolumen erfolgt, unter den folgenden Bedingungen: 0.5-12.5 mol $L^{-1}$ Natriumcarbonat / Natriumhydrogencarbonat (insbesondere 1.7 mM $Na_2CO_3$ / 1.7 mM $NaHCO_3$, 3.0-7.5 mM $Na_2CO_3$, bis 10.0 mM $Na_2CO_3$), Flussrate 0.1-2.5 ml min-1, Temperatur 293-353 K (insbesondere 293-313 K, vorzugsweise 303 K), Säulendimensionen 50-250 mm Länge, 2.0-4.0 mm Innendurchmesser, keinerlei Eluentzusätze.

Als Ionenaustauschmaterialien sind auch Polymere mit geladenen Gruppen als Bestandteil der Hauptkette bekannt, so z.B. die sog. Ionene. Unter dem Begriff Ionene werden hier und im folgenden Polymere verstanden, welche quartäre Ammoniumgruppen in der Hauptkette aufweisen. Es wurde im Stand der Technik versucht, derartige Ionene über ionische Wechselwirkungen auf Trägermaterialien aufzubringen, um sie für die Säulenchromatographie verfügbar zu machen. Dies ist bislang jedoch mit ausreichender Effizienz und Stabilität lediglich bei Silica-basierten Trägermaterialien gelungen (siehe hierzu Pirogov et al., Journal of Chromatography A, 850 (1999) 53-63; Pirogov et al., Journal of Chromatography A, 884 (2000) 31-39; Pirogov et al., Journal of Chromatography A, 916 (2001) 51-59; Krokhin et al., Journal of Analytical Chemistry, 57 Vol. 10 (2002) 920-927). Unter einem effizienten Ionenaustauschmaterial kann ein solches verstanden werden, welches über ≥ 2.000 theoretische Böden pro Säulenmeter verfügt, vorzugsweise von ≥ 5.000, ganz besonders bevorzugt von ≥ 10.000 (bei Anionentauschern: mit isokratischer Elution mit 1 mmol/L $Na_2CO_3$ / 3 mmol/L $NaHCO_3$ von organischen und anorganischen Anionen wie z.B. Fluorid, Chlorid, Bromid, Nitrit, Nitrat, Phosphat, Sulfat).

Aufgrund der sehr vorteilhaften Eigenschaften von Kunstharz-Trägermaterialien (wie bspw. Polystyrol-Divinylbenzol-Copolymerisate) in der Ionenchromatographie, z.B. deren mechanische und chemische Stabilität, wäre es wünschenswert, die vorstehend beschriebenen Polymere mit geladenen Gruppen als Bestandteil der Hauptkette oder Seitenketten, insbesondere die Ionene, auf derartigen Kunstharz-Trägermaterialien reproduzierbar und mit ausreichender resultierender Ionenaustauscheffizienz über ionische Wechselwirkung fixieren zu können.

Ein Ionenaustauschmaterial gemäss diesem Aspekt der Erfindung umfasst ein Trägerharz mit Kationenaustauschgruppen, und an diesem Trägerharz mittels ionischer Wechselwirkungen fixiertes Anionenaustauschmaterial, wobei das Anionenaustauschmaterial ein Polymer mit kationischen Gruppen als Bestandteil der Hauptkette ist. Besonders bevorzugt sind die kationischen Gruppen als Bestandteil der Hauptkette des Anionenaustauschmaterials ausgewählt aus der Gruppe bestehend aus Ammoniumgruppen, Sulfoniumgruppen, Phosphoniumgruppen, Arsoniumgruppen und Mischungen hiervon.

In besonders bevorzugten Ausführungsformen umfassen die kationischen Gruppen als Bestandteil der Hauptkette des Anionenaustauschmaterials quartäre Ammoniumgruppen. Derartige Polymere mit quartären Ammoniumgruppen als Bestandteil der Hauptkette werden in der Literatur häufig als Ionene bezeichnet. Ionene sind bspw. über mehrfache Menshutkin-Reaktion (N-Alkylierung) zugänglich, gemäss folgendem Reaktionsschema:

$$R^1R^2N - (CH_2)_n - NR^3R^4 + X - (CH_2)_m - X \rightarrow [- N^{\oplus}R^1R^2 - (CH_2)_n - N^{\oplus}R^3R^4 - (CH_2)_m -]_x + 2\ X^-$$

Hierbei bedeuten $R^1$, $R^2$ $R^3$, $R^4$ jeweils beliebige organische Reste, wobei insbesondere kurzkettige, unverzweigte Alkylgruppen wie $CH_3$ und $C_2H_5$ bevorzugt sind; X bedeutet eine Abgangsgruppe, vorzugsweise ein Halogen. Besonders bevorzugt sind $R^1$, $R^2$, $R^3$, $R^4$ sämtlich $CH_3$-Gruppen. Durch Variation der $(CH_2)_n$ bzw. $(CH_2)_m$-Ketten der Reaktanten können entsprechend modifizierte oder funktionalisierte Ionene erhalten werden. Vorzugsweise wird die Anzahl x der Wiederholungseinheiten während der Polymerisation derart kontrolliert sowie die Kettenlängen n und m der Reaktanten vorzugsweise derart gewählt, dass Polymere mit einem mittleren Molekulargewicht von etwa 2.000 bis etwa 100.000 g/mol resultieren, vorzugsweise von etwa 5.000 bis etwa 75.000 g/mol, besonders bevorzugt von etwa 8.000 bis etwa 30.000 g/mol. Polymere dieses Molekulargewichtsbereichs haben sich als besonders vorteilhaft erwiesen hinsichtlich der Effizienz und Stabilität der erhaltenen Ionenaustauschmaterialien.

In besonders bevorzugten Ausführungsformen umfasst das Anionenaustauschmaterial Wiederholungseinheiten, welche ausgewählt sind aus der Gruppe bestehend aus:

(a)

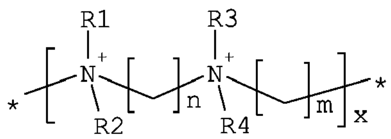

,

wobei unabhängig voneinander gilt: n = 2, 3, 4, 5, 6, 7, 8, 9, 10, 12, 18; m = 2, 3, 4, 5, 6, 7, 8, 9, 10, 12, 18; R1 = $CH_3$, $C_2H_5$; R2 = $CH_3$, $C_2H_5$; R3 = $CH_3$, $C_2H_5$; R4 = $CH_3$, $C_2H_5$;

(b)

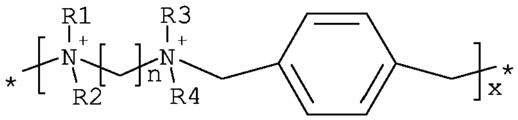

,

wobei unabhängig voneinander gilt: n = 2, 3, 4, 5, 6, 7, 8, 9, 10, 12, 18; R1 = $CH_3$, $C_2H_5$; R2 = $CH_3$, $C_2H_5$; R3 = $CH_3$, $C_2H_5$; R4 = $CH_3$, $C_2H_5$;

(c)

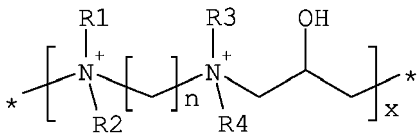

,

wobei unabhängig voneinander gilt: n = 2, 3, 4, 5, 6, 7, 8, 9, 10, 12, 18; R1 = $CH_3$, $C_2H_5$; R2 = $CH_3$, $C_2H_5$; R3 = $CH_3$, $C_2H_5$; R4 = $CH_3$, $C_2H_5$.

Als besonders vorteilhaft haben sich erwiesen: 2-6 Ionen (Struktur (a) mit n = 2; m = 6; R1 = R2 = R3 = R4 = $CH_3$) , vorzugsweise eines mittleren Molekulargewicht von etwa 2.000 bis etwa 100.000 g/mol, vorzugsweise von etwa 5.000 bis etwa 75.000 g/mol, besonders bevorzugt von etwa 8.000 bis etwa 30.000 g/mol; 6-6 Ionen (Struktur (a) mit n = m = 6; R1 = R2 = R3 = R4 = $CH_3$), vorzugsweise eines mittleren Molekulargewicht von etwa 2.000 bis etwa 100.000

g/mol, vorzugsweise von etwa 5.000 bis etwa 75.000 g/mol, besonders bevorzugt von etwa 8.000 bis etwa 30.000 g/mol; 10-6 Ionen (Struktur (a) mit n = 10; m = 6; R1 = R2 = R3 = R4 = $CH_3$), vorzugsweise eines mittleren Molekulargewicht von etwa 2.000 bis etwa 100.000 g/mol, vorzugsweise von etwa 5.000 bis etwa 75.000 g/mol, besonders bevorzugt von etwa 8.000 bis etwa 30.000 g/mol; sowie ein gemischtes, aliphatisch-aromatisches Ionen der Struktur (b) mit n = 6 und R1 = R2 = R3 = R4 = $CH_3$, vorzugsweise eines mittleren Molekulargewicht von etwa 2.000 bis etwa 100.000 g/mol, vorzugsweise von etwa 5.000 bis etwa 75.000 g/mol, besonders bevorzugt von etwa 8.000 bis etwa 30.000 g/mol. Die Synthese aller vorstehend genannten Ionene ist dem Fachmann geläufig.

Vorstehend genannte Trägerharze können wiederum auch für diesen Aspekt der Erfindung eingesetzt werden. Besonders bevorzugt ist das Trägerharz partikelförmig, bei mittleren Partikeldurchmessern im Bereich von 2 bis 100 μm, vorzugsweise 3 bis 50 μm, besonders bevorzugt 4 bis 25 μm.

Gemäss weiteren bevorzugten Ausführungsformen umfasst das Trägerharz Kationenaustauschgruppen, welche ausgewählt sind aus der Gruppe bestehend aus Sulfonatgruppen, Carboxylgruppen, Chelatbildnern, und Mischungen hiervon. Ganz besonders bevorzugt umfasst das Trägerharz Sulfonatgruppen.

Gemäss einer weiteren, bevorzugten Ausführungsform wird die Kationenaustauschkapazität des Trägerharzes durch die vorstehend genannten Kationenaustauschgruppen auf 1 - 250 pEquiv/g eingestellt, vorzugsweise 3 - 70 pEquiv/g, besonders bevorzugt 5 - 50 pEquiv/g. Die Kationenaustauschkapazität des Trägerharzes ist von grosser Bedeutung für die Möglichkeit, das Anionenaustauschmaterial hierauf fixieren zu können: Bei zu geringer Kationenaustauschkapazität kann das (gegensätzliche geladene) Anionenaustauschmaterial nicht fixiert werden, wohingegen bei zu hoher Kationenaustauschkapazität das Anionenaustauschmaterial zwar fixiert werden kann, die Ladungen des Anionenaustauschmaterials jedoch (über)kompensiert werden und somit keine Anionenaustauschwirkung mehr resultiert. Die Kationenaustauschkapazität muss daher sorgfältig kontrolliert werden, und vorzugsweise auch noch auf das jeweils zu verwendende polymere Anionenaustauschmaterial mit kationischen Gruppen als Bestandteil der Hauptkette abgestimmt werden. Mit Verfahren zur Sulfonierung bspw. mit $SO_3$ gelingt eine solche Kontrolle der Kationen-austauschkapazität nur schwer. Die Herstellung von Ionenaustauschmaterialien gemäss der Erfindung gelingt jedoch einfach und hervorragend reproduzierbar mit dem nachfolgend beschriebenen Verfahren.

Ein weiterer Aspekt der Erfindung betrifft ein Verfahren zur Herstellung eines Ionenaustauschmaterials, umfassend die Schritte:

(a) Bereitstellen eines hydrophoben Trägerharzes;
(b) Aufpfropfung eines Pfropfungsreagenzes mit tensidartiger Struktur auf das Trägerharz, wobei das Pfropfungsreagenz wenigstens eine insbesondere hydrophile Ionenaustauschgruppe umfasst.

Die Pfropfungsreaktion als solche ist dem Fachmann geläufig; die radikalische Pfropfung ist hierbei bevorzugt. Es hat sich gezeigt, dass es besonders vorteilhaft ist, wenn das Pfropfungsreagenz vor der Aufpfropfung auf das Trägerharz aufgereinigt wird. Die Pfropfungsreagenzien können bspw. durch nukleophile Substitution von Vinylbenzylhalogenid, insbesondere -chlorid mit einem Amin erhalten werden. Das Vinylbenzylchlorid wird hierbei bevorzugt in mit einem Inhibitor stabilisierter Form eingesetzt (sowohl aus Preisgründen als auch zur Unterdrückung unerwünschter Autopolymerisation). Der Inhibitor, sowie Lösungsmittel und Nebenprodukte können jedoch die Pfropfungsreaktion in Schritt (b) nachteilig beeinflussen. So hat sich gezeigt, dass eine besonders gleichmässige Belegungsdichte des Trägerharzes - und somit gleichmässige Hydratation der Ionenaustauschgruppen - erzielt wird, wenn das Pfropfungsreagenz vor der Aufpfropfung aufgereinigt wird. In den meisten Fällen kann dies bspw. durch Ausfällung mit Aceton und anschliessendem Waschen mit organischen Lösungsmitteln erfolgen.

Wie vorne beschrieben ist es bevorzugt, dass das Pfropfungsreagenz einen hydrophoben Teil mit einer aromatischen Struktureinheit aufweist. Stattdessen oder zusätzlich kann das Pfropfungsreagenz einen hydrophoben Teil mit einer insbesondere aliphatischen Kohlenstoffkette von ≥ 6 Kohlenstoffatomen, vorzugsweise von ≥ 8 Kohlenstoffatomen, besonders bevorzugt von ≥ 10 Kohlenstoffatomen aufweisen.

Als Trägerharze sind insbesondere die Polymere geeignet, welche vorne genannt sind, und welche insbesondere seitenständige, ungesättigte Gruppen, insbesondere Vinylgruppen aufweist.

Die Pfropfungsreaktion kann als Pfropf-Block-(Co-)Polymerisation (Aufpfropfung einer polymeren Seitenkette) oder als Pfropf-(Co-)Polymerisation (Polymerbildung der Seitenkette aus Monomeren) durchgeführt werden.

Weiter ist es bevorzugt, dass das Pfropfungsreagenz eine Vinylfunktion, insbesondere eine Struktureinheit umfasst, welche ausgewählt ist aus der Gruppe bestehend aus Vinylbenzylderivaten (insbesondere eines Salzes, vorzugsweise des Natriumsalzes einer Vinyl-Benzolsulfonsäure, insbesondere von 4-Vinyl-Benzolsulfonsäure); kondensierten Vinylaromaten, insbesondere Vinylnaphtylderivaten; nicht-kondensierten Vinylpolyaromaten, insbesondere Vinyl-Biphenylderivaten. Weiter sind Pfropfungsreagenzien bevorzugt, die quartäre Ammoniumgruppen als Ionenaustausgruppe tragen; besonders bevorzugt sind solche mit einer Diethanol-methylammoniumgruppe.

Das Pfropfungsreagenz ist vorzugsweise ausgewählt aus der Gruppe bestehend aus:

(a) Vinylbenzylderivaten gemäss der allgemeinen Formel

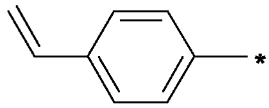

,

wobei (*) eine unmittelbar oder über einen insbesondere aliphatischen Linker gebundene Ionenaustauschgruppe bedeutet; insbesondere

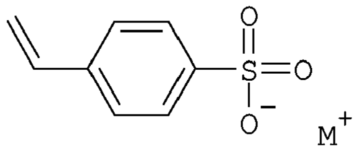

,

wobei $M^+$ ein Alkalikation bedeutet, vorzugsweise $Na^+$; und/oder

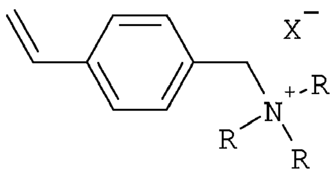

,

wobei $X^-$ ein Halogenid bedeutet, vorzugsweise $Cl^-$, und wobei (R) jeweils unabhängig voneinander eine vorzugsweise zumindest teilweise aliphatische Seitenkette bedeutet, insbesondere $-CH_2-R'$ (mit R' = H oder ein beliebiger aliphatischer und/oder aromatischer Rest), vorzugsweise $-CH_3$, $-(CH_2)_nCH_3$ (mit n = 1 bis 7), $-CH_2(CH_2)_nOH$ (mit n = 0 bis 7), $-CH_2{=}CH_2$, $-(CH_2)_n$-Aromat (mit n = 1 bis 7);

(b) Kondensierte Vinylaromaten insbesondere gemäss der allgemeinen Formel

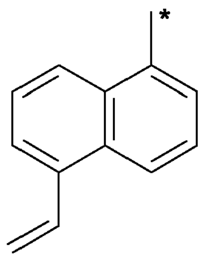

,

wobei (*) eine unmittelbar oder übereinen Linker gebundene Ionenaustauschgruppe bedeutet;

(c) Nicht-kondensierte Bi- oder Polyaromaten mit wenigstens einer Vinylfunktion und mit mindestens einer Ionenaustauschgruppe, insbesondere gemäss der allgemeinen Formel

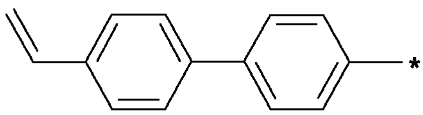

,

wobei (*) eine unmittelbar oder über einen Linker gebundene Ionenaustauschgruppe bedeutet;

(d) Di- oder Polyvinyverbindungen, insbesondere Di- oder Polyvinylaromaten, jeweils verbrückt mit einer quartären Aminfunktion,
insbesondere gemäss den allgemeinen Formeln

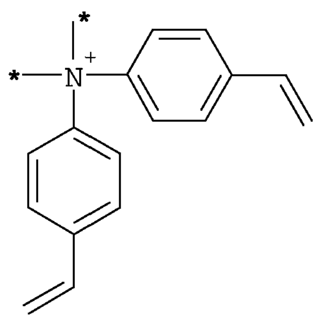
,
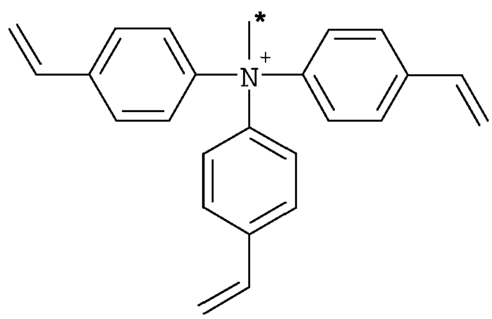
,

wobei (*) eine unmittelbar oder über einen Linker gebundene Ionenaustauschgruppe bedeutet; oder

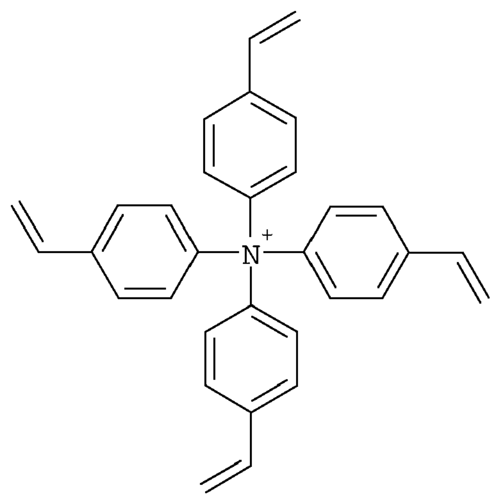
;

(e) Di- oder Polyvinyverbindungen, insbesondere Di- oder Polyvinylaromaten, jeweils verbrückt über mehr als eine quartäre Aminfunktion,
insbesondere gemäss den allgemeinen Formeln

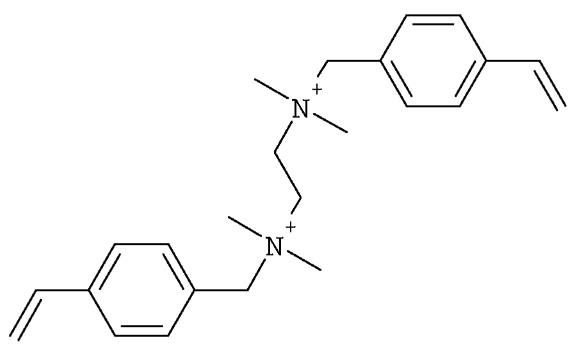
,

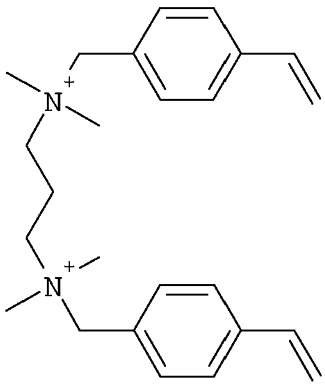,
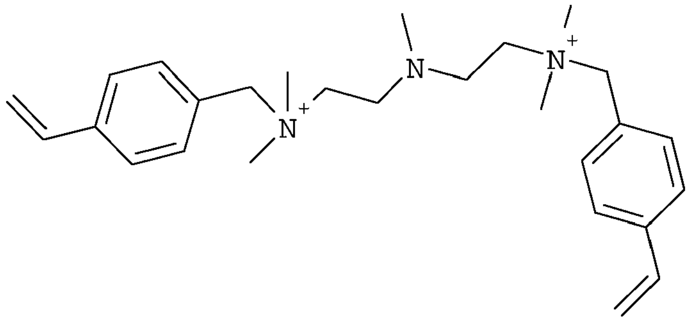.

Bevorzugte Pfropfungsreagenzien ((*) bedeutet hierbei jeweils einen vinylgruppenhaltigen organischen Rest, vorzugsweise die Vinylgruppe selbst) sind insbesondere:

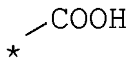;

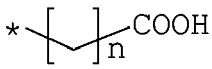,

insbesondere mit n = 1-4;

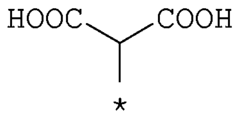;

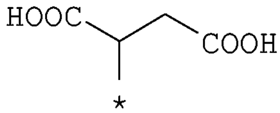;

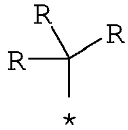,

wobei R jeweils unabhängig voneinander einen organischen Rest bedeutet, insbesondere mit R = H, $CH_2CH_3$, $CH_3$, COOH, $CH_2COOH$, $CH_2CH_3COOH$, Vinyl, Hexyl, Phenyl;

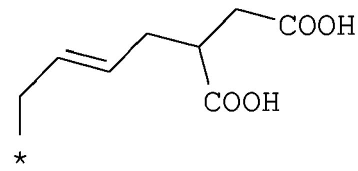

;

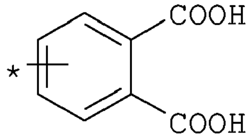

;

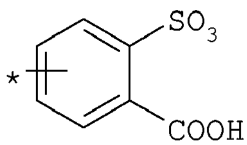

;

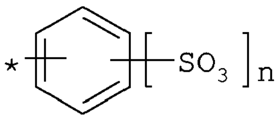

,

mit n = 1-3;

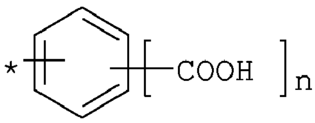

,

mit n = 1-3;

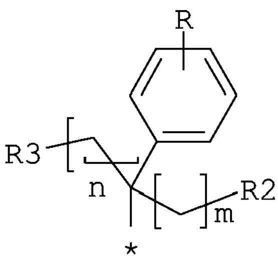

,

jeweils unabhängig voneinander mit R = $SO_3$, COOH, und R2, R3 = H, $CH_2CH_3$, $CH_3$, COOH, $CH_2COOH$, $CH_2CH_3COOH$, Vinyl, Hexyl, Phenyl, und n, m = 2-16;

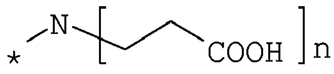

,

mit n = 1-3;

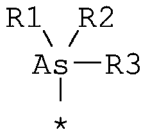

,

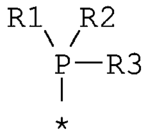

,

jeweils unabhängig voneinander mit R1, R2, R3 = $SO_3$, COOH, H, $CH_2CH_3$, $CH_3$, $CH_2COOH$, $CH_2CH_3COOH$, Vinyl, Hexyl, Phenyl;

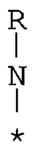

und

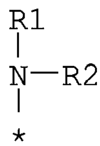

,

jeweils unabhängig voneinander mit R, R1, R2 = $SO_3$, COOH, H, $CH_2CH_3$, $CH_3$, $CH_2COOH$, $CH_2CH_3COOH$, Vinyl, Hexyl, Phenyl;

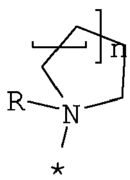

,

mit R = $SO_3$, COOH, H, $CH_2CH_3$, $CH_3$, $CH_2COOH$, $CH_2CH_3COOH$, Vinyl, Hexyl, Phenyl, und n = 1-5;

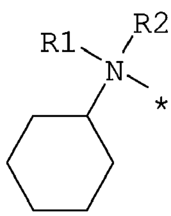

,

jeweils unabhängig voneinander mit R1, R2 = $SO_3$, COOH, H, $CH_2CH_3$, $CH_3$, $CH_2COOH$, $CH_2CH_3COOH$, Vinyl, Hexyl, Phenyl;

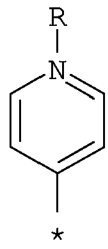 , 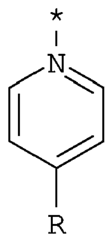 , 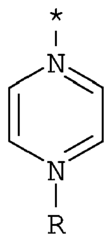 , 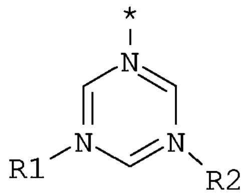 ,

jeweils unabhängig voneinander mit R, R1, R2 = $SO_3$, COOH, H, $CH_2CH_3$, $CH_3$, $CH_2COOH$, $CH_2CH_3COOH$, Vinyl, Hexyl, Phenyl;

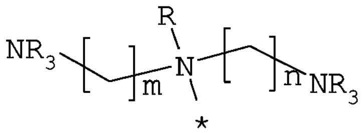 ,

jeweils unabhängig voneinander mit $SO_3$, COOH, H, $CH_2CH_3$, $CH_3$, $CH_2COOH$, $CH_2CH_3COOH$, Vinyl, Hexyl, Phenyl, und jeweils unabhängig voneinander n, m = 1-17;

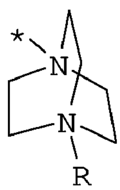 ,

mit R = $SO_3$, COOH, H, $CH_2CH_3$, $CH_3$, $CH_2COOH$, $CH_2CH_3COOH$, Vinyl, Hexyl, Phenyl;

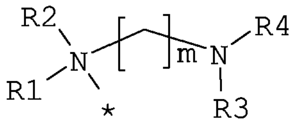 ,

jeweils unabhängig voneinander mit R1, R2, R3, R4= $SO_3$, COOH, H, $CH_2CH_3$, $CH_3$, $CH_2COOH$, $CH_2CH_3COOH$, Vinyl, Hexyl, Phenyl, und m = 1-17;

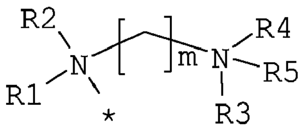 ,

jeweils unabhängig voneinander mit R1, R2, R3, R4, R5 = $SO_3$, COOH, H, $CH_2CH_3$, $CH_3$, $CH_2COOH$, $CH_2CH_3COOH$, Vinyl, Hexyl, Phenyl, und m = 1-17.

Bevorzugt sind ferner tensidartige Pfropfungsreagenzien enthaltend Pyrolidin-, Piperidin-, Morpholin-, Pyrol-, Pyridin-, Pyrimidin-, Pyrazin-, Triazin-, Pyridon-, Chinolin-, Purin-, Indol-, Oxazol-, Thiazol-, Imidazol-Ringsysteme sowie Kombinationen solcher Ringsysteme.

Unter dem Aspekt der ionischen Fixierung von Ionenen auf einem Trägerharz umfasst das Verfahren die

Schritte:

(a) Funktionalisieren eines hydrophoben Trägerharzes mit Kationen-austauschgruppen mittels Pfropfpolymerisation;

(b) Fixieren eines polymeren Anionenaustauschmaterials mit kationischen Gruppen als Bestandteil der Hauptkette auf dem Trägerharz über ionische Wechselwirkungen.

Besonders bevorzugt umfassen die kationischen Gruppen als Bestandteil der Hauptkette des Anionenaustauschmaterials quartäre Ammoniumgruppen, Sulfoniumgruppen, Phosphoniumgruppen, Arsoniumgruppen und ggf. Mischungen hiervon.

Weiter bevorzugt ist, dass das Trägerharz mit wenigstens einem Pfropfungsreagenz funktionalisiert wird, welches wenigstens eine Vinylgruppe enthält, und welches weiter eine Funktionalität enthält, welche ausgewählt ist aus der Gruppe bestehend aus Sulfonatgruppen, Carboxylgruppen, Chelatbildnern, und Mischungen hiervon.

Die Pfropfpolymerisation wird vorzugsweise derart kontrolliert, dass eine Ionenaustauschkapazität, insbesondere eine Kationenaustauschkapazität des funktionalisierten Trägerharzes von 1-250 pEquiv/g erreicht wird, vorzugsweise 3-70 pEquiv/g, besonders bevorzugt 5-50 µEquiv/g.

In weiteren, besonders bevorzugten Ausführungsformen wird das Trägerharz mit wenigstens einem Pfropfungsreagenz funktionalisiert, welches wenigstens eine Vinylgruppe enthält, und welches weiter eine Funktionalität enthält, welche ausgewählt ist aus der Gruppe bestehend aus Sulfonatgruppen, Carboxylgruppen, Chelatbildnern, und Mischungen hiervon.

Es hat sich für die anschliessende Möglichkeit der Fixierung des Ionens über ionische Wechselwirkungen als besonders vorteilhaft erwiesen, wenn die Pfropfpolymerisation derart kontrolliert wird, dass eine Kationen-austauschkapazität des funktionalisierten Trägerharzes von 1 - 150 pEquiv/g erreicht wird, vorzugsweise 3 - 70 pEquiv/g, besonders bevorzugt 5 - 50 pEquiv/g. Bei derartigen Kationenaustauschkapazitäten stehen ausreichend Ladungen zur Fixierung der Ionene zur Verfügung, die Ladungen der Ionene werden jedoch nicht (über)kompensiert.

Die Erfindung wird nachfolgend zum besseren Verständnis anhand von Ausführungsbeispielen und Figuren erläutert, ohne dass die Erfindung auf diese Ausführungsformen zu beschränken ist. Es zeigen:

Fig. 1: Elutionsprofil eines erfindungsgemässen Anionentauschermaterials;

Fig. 2: Elutionsprofil des kommerziellen Anionentauschers A SUPP 10-100, Metrohm AG; im Vergleich zu Fig. 1;

Fig. 3: Illustration der Fixierung von Ionenen auf Trägerharzen;

Fig. 4: Nettoretention verschiedener Anionen in Abhängigkeit von der Menge des auf dem Trägerharz fixierten Ionens (am Beispiel von 6-6-Ionen auf PS/DVB, sulfonatfunktionalisiert mittels Pfropfpolymerisation);

Fig. 5: Langzeitstabilität einer erfindungsgemässen Ionenaustauschersäule (am Beispiel von 6-6-Ionen auf PS/DVBB, sulfonatfunktionalisiert mittels Pfropfpolymerisation und einer Kationentauschkapazität von 20 µEquiv/g).

<u>Synthese von N-Divinylbenzyl-N,N-Diethanolmethylammoniumchlorid (FSDEMA)</u>

In einem trockenen 100 ml Dreihalskolben mit Rückflusskühler und Schutzgasanschluss werden 5,00 ml (0,035 mol) stabilisiertes Vinylbenzylchlorid in 15,0 ml Dichlormethan vorgelegt und unter Rühren mit Stickstoff gespült. Mittels eines Septums werden 10,00 ml (0,087 mol) Diethanolmethylamin tropfenweise über 1 Stunde zugegeben. Durch weitere Zugabe von 40,0 ml Aceton nach 2 Stunden bildet sich in der gelben Lösung ein weißer Feststoff. Anschließend lässt man 3 Stunden bei Raumtemperatur rühren und filtriert den Feststoff ab. Dieser wird mit Aceton mehrmals gewaschen. Der erhaltene kristalline, weiße Feststoff (FSDEMA) wird im Hochvakuum getrocknet.
$^1$H-NMR ($D_2O$, ppm): 2,9 (s, 3H), 3,3-3,6 (m, 4H), 4,0-4,1 (m, 4H), 4,5 (s, 2H), 5,3 (d, 1H), 5,8 (d, 1H), 6, 8 (q, 1H), 7,4-7,7 (m, 4H).

<u>Herstellung eines mit FSDEMA funktionalisierten Trägermaterials</u>

In den trockenen Reaktor wurden 7,50 g getrocknetes Trägermaterial (hochquervernetzte, unfunktionalisierte PS/DVB Partikel mit einer durchschnittlichen Partikelgrösse von ca. 4600 nm, mit 20-80% DVB) gegeben. Dieses wurde trocken gerührt, bis keine größeren Agglomerate mehr vorhanden waren. Anschließend werden 80,0 ml H2O und 20,0 ml Ethanol in den Reaktor gegeben und unter Rühren die Suspension auf 343 K unter Stickstoff als Schutzgas erwärmt. Nach Erreichen der Reaktionstemperatur werden 1,20 g FSDEMA als Feststoff zugegeben und 5 Minuten gerührt.

Danach werden 1,20 g Kaliumperoxodisulfat als Radikalstarter zugegeben. Dies dient zugleich als Startpunkt der Reaktion. Die Suspension wird über die Reaktionsdauer von 4 Stunden bei 343 K unter Schutzgas gerührt. Anschließend wird die Suspension auf 278 K abgekühlt und der Feststoff abfiltriert und mit Ethanol gewaschen. Das erhaltene Produkt wird in 200 ml Sedimentationslösung (175 ml Ethanol und 25 ml Cyclohexanol) 24 Stunden sedimentiert. Die überstehende Lösung wird entfernt, der Feststoff erneut mit Ethanol gewaschen und getrocknet.

Fig. 1 zeigt exemplarisch ein Elutionsprofil dieses Anionenaustauschers (1 - Totvolumen; 2 - Fluorid; 3 - Chlorid; 4 - Nitrit; 5 - Bromid; 6 - Nitrat; 7 - Phosphat; 8 - Sulfat), unter den folgenden Elutionsbedingungen: Säulentemperatur 318K; Eluent: 7,5 mmol/l Natriumcarbonat; Flussrate: 1,0 ml/min; Säulendimension: 100x4 mm.

Im Vergleich hierzu zeigt Fig. 2 exemplarisch ein Elutionsprofil eines leistungsfähigen, kommerziellen Anionentauschers (A SUPP 10 - 100 (Seriennummer 040907-S42), Metrohm AG bei identischer Peakzuordnung wie in Fig. 1, unter den folgenden Elutionsbedingungen: Säulentemperatur 318K; Eluent: 5,0 mmol/l Natriumcarbonat, 5,0 mmol/l Natriumhydrogencarbonat; Flussrate: 1,2 ml/min.

Beim Vergleich der Elutionsprofile sind entscheidende Unterschiede erkennbar:

- Während bei dem Anionentauscher gemäss der Erfindung das Fluorid nicht mit dem Totvolumen eluiert wird, eluiert das Fluorid bei dem kommerziellen Anionentauscher mit dem Totvolumen, ist also nicht aufgelöst. Das deutet auf eine im Vergleich niedrigere Belegungsdichte bei dem erfindungsgemässen Anionenaustauscher hin.
- Die Peakasymmetrie $A_S$ von Bromid und Nitrat ist bei dem Anionentauscher gemäss der Erfindung wesentlich geringer als bei dem kommerziellen Anionentauscher, was auf eine gleichmässige Hydratation der Anionenaustauschergruppen hinweist, also auch auf eine gleichmässige Verteilung der Seitenketten auf dem Trägerharz.

Fig. 1: $A_S(Br^-) = 1,53$

$A_S(NO_3^-) = 1,96$

Fig. 2: $A_S(Br^-) = 2,43$

$A_S(NO_3^-) = 3,42$

Fig. 3 zeigt illustrativ die elektrostatische Fixierung von Ionenen auf mit Kationenaustauchgruppen funktionalisierten Trägerharzen.

Im oberen Teil ist ein zu hoher Funktionalisierungsgrad des Trägerharzes gezeigt: Zwar wird das Ionen fixiert, jedoch resultiert netto eine negative Ladung, wodurch keine Anionentauschkapazität gegeben ist (vollständig sulfonierte, kommerziell erhältliche PS/DVB-Trägerharze weisen etwa eine Kationenaustauschkapazität von ca. 2000 pEquiv/g auf, was die Ladungen von Ionenen vollständig überkompensieren würde).

Im unteren Teil ist ein ausreichender, jedoch niedriger Funktionalisierungsgrad des Trägerharzes illustriert, welcher nach Fixierung des Ionens netto in einer positiven Ladung resultiert, wodurch Anionentauschkapazität gegeben ist. Durch das erfindungsgemässe Verfahren kann besonders leicht ein definierter, geeigneter Funktionalisierungsgrad eingestellt werden.

Herstellung der Ionene

Soweit nicht anders angegeben, sind hier und im Folgenden Chemikalien der Reinheit "spectral grade" oder besser zu verwenden. Die Ionene werden durch mehrfache Menshutkin-Raktion erhalten. 50 mmol eines organischen Diamins (z.B. N,N,N',N'-Tetramethyl-1,6-hexandiamin; Fluka, Buchs, Schweiz) werden in 25 ml DMF vorgelegt, und 50 mmol organisches Dihalogenid (z.B. 1,6-Dibromohexan; Merck, Hohenbrunn, Deutschland) 25 ml DMF unter Rühren langsam zugegeben. In Abhängigkeit von der Reaktivität der Monomere wird zwischen 15 h und 120 h weiter reagieren gelassen. Die Reaktionsmischung wird in einen grossen Überschuss Aceton gegeben, und das Präzipitat abfiltriert und unter reduziertem Druck getrocknet. Es werden hochgradig hygroskopische Produkte erhalten.

Funktionalisierung des Trägerharzes (Pfropfpolymerisation)

(Exemplarisch anhand von 4-Vinyl-Benzolsulfonsäure Natriumsalz auf PS/DVB) In einen trockenen Reaktor werden 2 g getrocknetes Polystyrol/Divinylbenzol-Trägermaterial von 5 µm durchschnittlicher Grösse gegeben. Es wird trocken gerührt, bis keine grösseren Agglomerate mehr sichtbar sind. Es werden 80 g deionisiertes Wasser und 15, 8 g Ethanol in den Reaktor gegeben und anschliessend auf 70°C unter Stickstoff-Schutzatmosphäre erwärmt. Anschliessend werden bei verschiedenen Reaktionsansätzen verschiedene Mengen von 4-Vinylbenzolsulfonsäure Natriumsalz hinzugegeben. Danach werden 0,5 g Kaliumperoxodisulfat zugegeben. Während 4 h bei 70°C wird unter Schutzgasatmosphäre reagieren gelassen. Anschliessend wird die Suspension auf 5°C abgekühlt und der Feststoff abfiltriert und

mit 100 ml Ethanol gewaschen. Das erhaltene Produkt wird in 200 ml Sedimentationslösung (175 ml Ethanol und 25 ml Cyclohexanol) während 24 h sedimentiert. Die überstehende Lösung wird entfernt, der verbleibende Feststoff erneut mit 200 ml Ethanol gewaschen und unter reduziertem Druck getrocknet.

Über die zugegebene Menge des 4-Vinylbenzolsulfonsäure Natriumsalzes lässt sich die resultierende Kationentauschkapazität (Protonenaustauschkapazität) des Trägermaterials leicht und reproduzierbar steuern: So wurden bei einer Zugabe von 0,025 g 4-Vinylbenzolsulfonsäure Natriumsalz 5 μEquiv/g erhalten, bei 0,050 g 10 pEquiv/g, bei 0,075 g 15 pEquiv/g, bei 0,150 g 30 pEquiv/g, bei 0,225 g 45 pEquiv/g, bei 0,350 g 70 pEquiv/g, und bei 0,425 g 85 μEquiv/g.

Fixierung der Ionene auf dem Trägerharz und Säulenherstellung

Lösungen von 0,500 g des jeweiligen Ionens in 5,0 ml deionisiertes Wasser werden unter Rühren zu einer Suspension von 2,0 g des jeweiligen funktionalisierten Trägerharzes in 45,0 ml dionisiertes Wasser gegeben. Die Mischung wird während 30 Minuten bei 70°C gerührt. Es wird eine Suspension eines Ionentauschermaterials erhalten, welche in dieser Form weiterverarbeitet wird. Es hat sich gezeigt, dass bei der Fixierung der Ionene auf dem Trägerharz ohne weiteres ein Überschuss des Ionens zugegeben werden kann: Bei Sättigung des Trägerharzes mit Ionen wird weder eine weitere Erhöhung der Kapazität noch eine Änderung der Selektivität beobachtet (vgl. Figur 4).

Säulen werden mit den verschiedenen erhaltenen Ionentauschmaterialien nach dem Fachmann geläufigen Methoden mit konventionellen Säulenpack-Vorrichtungen hergestellt.

Es wurden mit den verschiedenen funktionalisierten Trägerharzen und verschiedenen Ionenen die folgenden Ionentauschersäulen erhalten (na = not available):

| Kationentauschkap. des Trägerharzes [μEquiv/g] | Anionentauschkap. der 2-6-Ionen-Säule [μEquiv/g] | Anionentauschkap. der 6-6-Ionen-Säule [μEquiv/g] | Anionentauschkap. der 6-10-Ionen-Säule [μEquiv/g] |
|---|---|---|---|
| 5 | < 5 | 34 | 165 |
| 10 | 7 | 21 | 147 |
| 15 | 11 | 28 | 142 |
| 30 | 24 | 33 | 152 |
| 45 | *na* | 29 | *na* |
| 70 | *na* | 31 | *na* |
| 85 | *na* | 33 | *na* |

Leistungsprofil der Säulen mit den erfindungsgemässen Ionentauschmaterialien

Nachstehende Tabelle zeigt am Beispiel von 6-6 Ionen, gesättigt fixiert auf einem PS/DVB Trägerharz mit einer Kationenaustauschkapazität von 30 μEquiv/g (hergestellt wie vorstehend beschrieben) die typische, hervorragende Leistungscharakteristik eines erfindungsgemässen Ionenaustauschmaterials, bzw. einer erfindungsgemässen Ionenaustauschersäule (RSD = relative Standardabweichung; TB/m (bzw. TP/m) = Anzahl theoretischer Böden pro Säulenmeter):

| | Retentionsfaktor *k* | | Asymmetrie-Faktor $A_s$ | | Auflösung R | | Effizienz | |
|---|---|---|---|---|---|---|---|---|
| | Ø [$min^{-1}$] | RSD [%] | Ø | RSD [%] | Ø | RSD [%] | Ø [$TBm^{-1}$] | RSD [%] |
| Fluorid | 1,13 | 2,08 | 2,23 | 1,68 | 3,92 | 6,58 | 6715 | 4,05 |
| Chlorid | 2,76 | 2,16 | 1,02 | 12,77 | 2,56 | 6,77 | 11264 | 22,16 |
| Nitrit | 3,84 | 2,18 | 1,20 | 3,41 | 4,27 | 4,42 | 15039 | 9,46 |
| Bromid | 6,02 | 2,64 | 1,08 | 3,38 | 2,81 | 2,46 | 18897 | 6,86 |
| Nitrat | 7,88 | 2,68 | 1,06 | 2,47 | 6,56 | 2,17 | 20037 | 6,70 |
| Phosphat | 14,15 | 2,81 | 0,93 | 3,25 | 2,70 | 1,48 | 20249 | 10,75 |
| Sulfat | 22,87 | 3,22 | 0,93 | 3,09 | 0,00 | 0,00 | 19169 | 14,03 |

Alle erfindungsgemäss hergestellten Säulen sind auch herausragend robust und langzeitstabil (Fig. 5): Weder Retentionsfaktor, noch Asymmetriefaktor, Auflösung oder Effizienz sind während Langzeitversuchen erheblich beeinflusst; Figur 5 zeigt dies am Beispiel von 6-6-Ionen auf 20 μEquiv/g PS/DVB Trägermaterial, hergestellt wie vorstehend beschrieben. Als Testanion diente Phosphat, unter Standardchromatographiebedingungen (Eluent: 1 mmol/l $Na_2CO_3$, 3 mmol/l $NaHCO_3$; Flussrate: 0,8 ml/min; Temperatur: 30°C). Nicht einmal der Durchfluss von 100 mmol/l NaOH während eines Tages führte zu einer signifikanten Änderung der Retentionsfaktoren oder der Effizienz (Daten nicht gezeigt).

## Patentansprüche

1. Ionenaustauschmaterial, umfassend ein hydrophobes Trägerharz mit aufgepfropften Seitenketten, wobei die Seitenketten Ionenaustauschgruppen umfassen,
**dadurch gekennzeichnet, dass** die Seitenketten eine tensidartige Struktur aufweisen.

2. Ionenaustauschmaterial gemäss Anspruch 1,
**dadurch gekennzeichnet, dass** die Seitenkette einen hydrophoben Teil mit einer aromatischen Struktureinheit aufweist.

3. Ionenaustauschmaterial gemäss Anspruch 2,
**dadurch gekennzeichnet, dass** das Verhältnis der in den hydrophoben Teilen der Seitenketten vorhandenen aromatischen Struktureinheiten zu der Anzahl der hydrophilen Bereiche, insbesondere zu der Anzahl der Ionenaustauschgruppen in den hydrophilen Bereichen, ≥ 1, insbesondere ≥ 2, ≥ 3 oder ≥ 4 ist.

4. Ionenaustauschmaterial gemäss Anspruch 2 oder 3,
**dadurch gekennzeichnet, dass** die Seitenkette eine Struktureinheit umfasst, welche ausgewählt ist aus der Gruppe bestehend aus Benzylderivaten, Naphtylderivaten, Biphenylderivaten.

5. Ionenaustauschmaterial gemäss einem der Ansprüche 1 bis 4,
**dadurch gekennzeichnet, dass** die Seitenkette einen hydrophoben Teil mit einer insbesondere aliphatischen Kohlenstoffkette von ≥ 6 Kohlenstoffatomen, vorzugsweise von ≥ 8 Kohlenstoffatomen, besonders bevorzugt von ≥ 10 Kohlenstoffatomen aufweist.

6. Ionenaustauschmaterial gemäss einem der Ansprüche 1 bis 5,
**dadurch gekennzeichnet, dass** das Trägerharz aus einem Polymer gebildet ist, welches seitenständige, ungesättigte Gruppen, insbesondere Vinylgruppen aufweist.

7. Ionenaustauschmaterial gemäss einem der Ansprüche 1 bis 6,
**dadurch gekennzeichnet, dass** die aufgepfropften Seitenketten selbst Polymere sind.

8. Ionenaustauschmaterial nach einem der Ansprüche 1 bis 7,
**dadurch gekennzeichnet, dass** das Trägerharz partikelförmig ist, bei mittleren Partikeldurchmessern im Bereich von 2 bis 100 μm, vorzugsweise 3 bis 25 μm, besonders bevorzugt 4 bis 10 μm.

9. Ionenaustauschmaterial insbesondere gemäss einem der Ansprüche 1 bis 7, umfassend ein Trägerharz mit aufgepfropften Seitenketten mit Kationenaustauschgruppen, und an diesem Trägerharz über ionische Wechselwirkungen fixiertes Anionenaustauschmaterial, wobei das Anionenaustauschmaterial ein Polymer mit kationischen Gruppen als Bestandteil der Hauptkette ist.

10. Ionenaustauschmaterial gemäss Anspruch 9,
**dadurch gekennzeichnet, dass** die kationischen Gruppen als Bestandteil der Hauptkette des Anionenaustauschmaterials ausgewählt sind aus der Gruppe bestehend aus insbesondere quartären Ammoniumgruppen, Sulfoniumgruppen, Phosphoniumgruppen, und Mischungen hiervon.

11. Ionenaustauschmaterial gemäss einem der Ansprüche 9 oder 10,
**dadurch gekennzeichnet, dass** das Anionenaustauschmaterial Wiederholungseinheiten umfasst, welche ausgewählt sind aus der Gruppe bestehend aus:

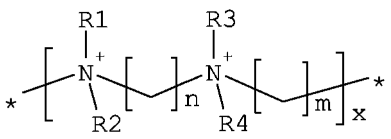

,

wobei unabhängig voneinander gilt: n = 2, 3, 4, 5, 6, 7, 8, 9, 10, 11, 12, 13, 14, 15, 16, 17, 18; m = 2, 3, 4, 5, 6, 7, 8, 9, 10, 11, 12, 13, 14, 15, 16, 17 18; R1 = $CH_3$, $C_2H_5$; R2 = $CH_3$, $C_2H_5$; R3 = $CH_3$, $C_2H_5$; R4 = $CH_3$, $C_2H_5$; und

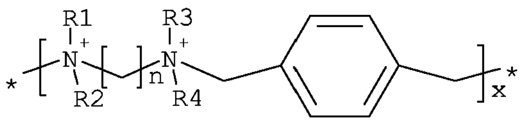

,

wobei unabhängig voneinander gilt: n = 2, 3, 4, 5, 6, 7, 8, 9, 10, 11, 12, 13, 14, 15, 16, 17, 18; R1 = $CH_3$, $C_2H_5$; R2 = $CH_3$, $C_2H_5$; R3 = $CH_3$, $C_2H_5$; R4 = $CH_3$, $C_2H_5$; und

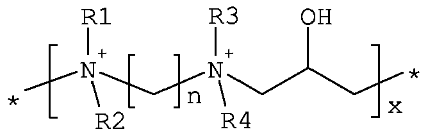

,

wobei unabhängig voneinander gilt: n = 2, 3, 4, 5, 6, 7, 8, 9, 10, 11, 12, 13, 14, 15, 16, 17, 18; R1 = $CH_3$, $C_2H_5$; R2 = $CH_3$, $C_2H_5$; R3 = $CH_3$, $C_2H_5$; R4 = $CH_3$, $C_2H_5$.

**12.** Ionenaustauschmaterial gemäss einem der Ansprüche 9 bis 11,
**dadurch gekennzeichnet, dass** die Kationenaustauschgruppen in den aufgepfropften Seitenketten ausgewählt sind aus der Gruppe bestehend aus Sulfonatgruppen, Carboxylgruppen, Chelatbildnern, und Mischungen hiervon.

**13.** Ionenaustauschmaterial gemäss einem der Ansprüche 9 bis 12,
**dadurch gekennzeichnet, dass** die Kationenaustauschkapazität des Trägerharzes mit den aufgepfropften Seitenketten 1-250 pEquiv/g beträgt, vorzugsweise 3-70 pEquiv/g, besonders bevorzugt 5-50 μEquiv/g.

**14.** Ionenaustauschmaterial gemäss einem der Ansprüche 1 bis 13,
**dadurch gekennzeichnet, dass** es sich um ein Anionenaustauschmaterial handelt, welches eine Signalasymmetrie $A_S$ für Bromid und Nitrat von ≤ 2 aufweist und/oder mit welchem die Elution von Fluorid nicht mit dem Totvolumen erfolgt.

**15.** Verfahren zur Herstellung eines Ionenaustauschmaterials insbesondere gemäss einem der Ansprüche 1 bis 14, umfassend die Schritte:

(a) Bereitstellen eines hydrophoben Trägerharzes;
(b) Aufpfropfung eines Pfropfungsreagenzes mit tensidartiger Struktur auf das Trägerharz, wobei das Pfropfungsreagenz wenigstens eine Ionenaustauschgruppe umfasst.

**16.** Verfahren gemäss Anspruch 15,
**dadurch gekennzeichnet, dass** das Pfropfungsreagenz vor der Aufpfropfung auf das Trägerharz aufgereinigt wird.

**17.** Verfahren gemäss einem der Ansprüche 15 oder 16,
**dadurch gekennzeichnet, dass** das Pfropfungsreagenz einen hydrophoben Teil mit einer aromatischen Struktureinheit aufweist.

**18.** Verfahren gemäss Anspruch 17,
**dadurch gekennzeichnet, dass** das Verhältnis der in den hydrophoben Teilen des Pfropfungsreagenzes vorhandenen aromatischen Struktureinheiten zu der Anzahl der hydrophilen Bereiche, insbesondere zu der Anzahl der Ionenaustauschgruppen in den hydrophilen Bereichen, $\geq 1$, insbesondere $\geq 2$, $\geq 3$, oder $\geq 4$ ist.

**19.** Verfahren gemäss einem der Ansprüche 15 bis 18,
**dadurch gekennzeichnet, dass** das Pfropfungsreagenz eine Vinylfunktion, insbesondere eine Struktureinheit umfasst, welche ausgewählt ist aus der Gruppe bestehend aus Vinylbenzylderivaten; kondensierten Vinylaromaten, insbesondere Vinylnaphtylderivaten; nicht-kondensierten Vinylpolyaromaten, insbesondere Vinyl-Biphenylderivaten.

**20.** Verfahren gemäss einem der Ansprüche 15 bis 19,
**dadurch gekennzeichnet, dass** das Pfropfungsreagenz ausgewählt ist aus der Gruppe bestehend aus:

(a) Vinylbenzylderivaten gemäss der allgemeinen Formel

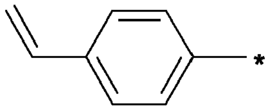

,

wobei (*) eine unmittelbar oder über einen insbesondere aliphatischen Linker gebundene Ionenaustauschgruppe bedeutet; insbesondere

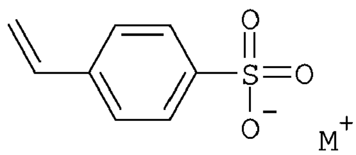

,

wobei $M^+$ ein Alkalikation bedeutet, vorzugsweise $Na^+$; und/oder

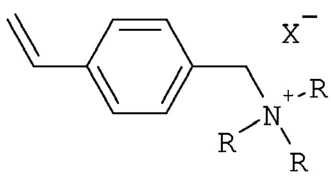

,

wobei $X^-$ ein Halogenid bedeutet, vorzugsweise $Cl^-$, und wobei (R) jeweils unabhängig voneinander eine vorzugsweise zumindest teilweise aliphatische Seitenkette bedeutet, insbesondere $-CH_2-R'$ (mit R' = H oder ein beliebiger aliphatischer und/oder aromatischer Rest), vorzugsweise $-CH_3$, - $(CH_2)_nCH_3$ (mit n = 1 bis 7), $-CH_2(CH_2)_nOH$ (mit n = 0 bis 7), $-CH_2=CH_2$, $-(CH_2)_n$-Aromat (mit n = 1 bis 7);
(b) Kondensierte Vinylaromaten insbesondere gemäss der allgemeinen Formel

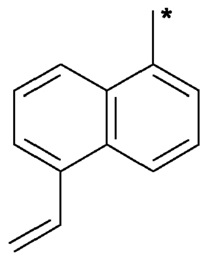

,

wobei (*) eine unmittelbar oder über einen Linker gebundene Ionenaustauschgruppe bedeutet;
(c) Nicht-kondensierte Bi- oder Polyaromaten mit wenigstens einer Vinylfunktion und mit mindestens einer Ionenaustauschgruppe, insbesondere gemäss der allgemeinen Formel

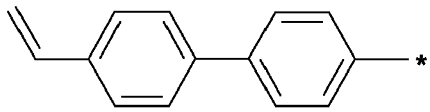

,

wobei (*) eine unmittelbar oder über einen Linker gebundene Ionenaustauschgruppe bedeutet;
(d) Di- oder Polyvinylverbindungen, insbesondere Di- oder Polyvinylaromaten, jeweils verbrückt mit einer quartären Aminfunktion, insbesondere gemäss der allgemeinen Formeln

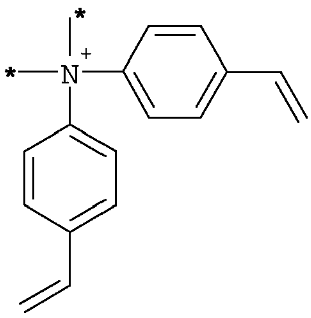

,

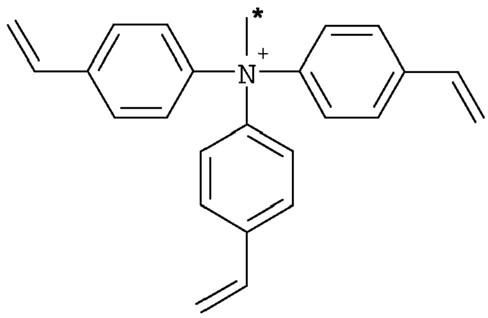

,

wobei (*) eine unmittelbar oder über einen Linker gebundene Ionenaustauschgruppe bedeutet; oder

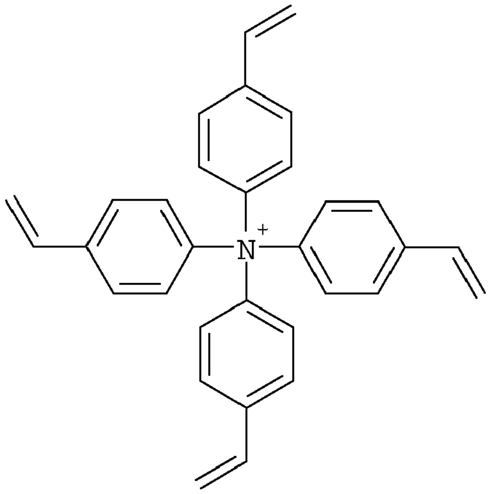

;

(e) Di- oder Polyvinyverbindungen, insbesondere Di- oder Polyvinylaromaten, jeweils verbrückt über mehr als eine quartäre Aminfunktion, insbesondere gemäss der allgemeinen Formeln

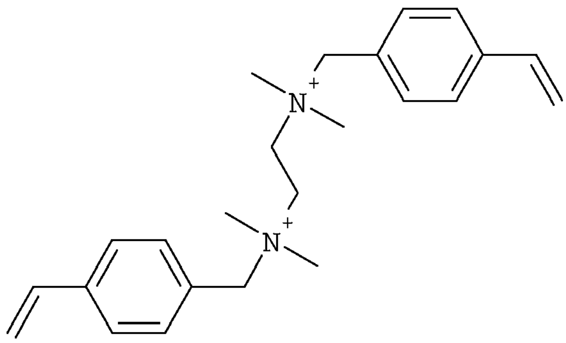

,

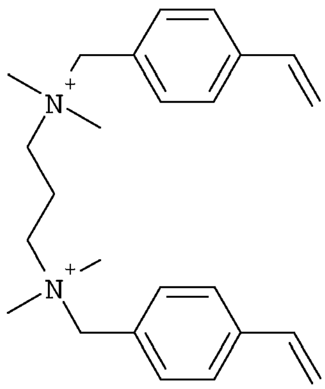

, und

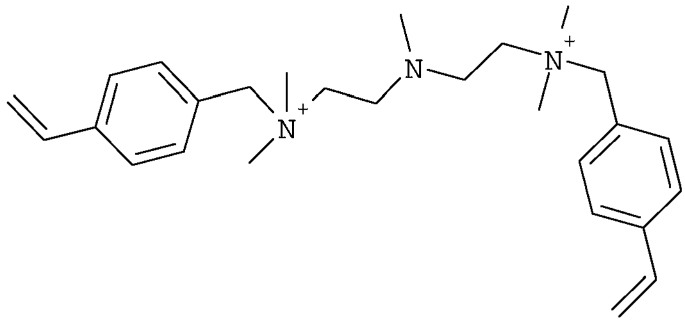

.

**21.** Verfahren gemäss einem der Ansprüche 15 bis 20,
**dadurch gekennzeichnet, dass** das Pfropfungsreagenz einen hydrophoben Teil mit einer insbesondere aliphatischen Kohlenstoffkette von ≥ 6 Kohlenstoffatomen, vorzugsweise von ≥ 8 Kohlenstoffatomen, besonders bevorzugt von ≥ 10 Kohlenstoffatomen aufweist.

**22.** Verfahren gemäss einem der Ansprüche 15 bis 21,
**dadurch gekennzeichnet, dass** das Trägerharz ein Polymer umfasst oder aus diesem besteht, welches seitenständige, ungesättigte Gruppen, insbesondere Vinylgruppen aufweist.

**23.** Verfahren gemäss einem der Ansprüche 15 bis 22,
**dadurch gekennzeichnet, dass** die Pfropfungsreaktion als Pfropf-Block-(Co-)Polymerisation oder als Pfropf-(Co-) Polymerisation durchgeführt wird.

**24.** Verfahren insbesondere gemäss einem der Ansprüche 15 bis 23, umfassend die Schritte:

(a) Funktionalisieren eines hydrophoben Trägerharzes mit Kationen-austauschgruppen mittels Pfropfpolymerisation;
(b) Fixieren eines polymeren Anionenaustauschmaterials mit kationischen Gruppen als Bestandteil der Hauptkette auf dem Trägerharz über ionische Wechselwirkungen.

**25.** Verfahren gemäss Anspruch 24,
**dadurch gekennzeichnet, dass** die kationischen Gruppen als Bestandteil der Hauptkette des Anionenaustauschmaterials quartäre Ammoniumgruppen umfassen.

**26.** Verfahren gemäss einem der Ansprüche 15 bis 25,
**dadurch gekennzeichnet, dass** das Trägerharz mit wenigstens einem Pfropfungsreagenz funktionalisiert wird, welches wenigstens eine Vinylgruppe enthält, und welches weiter eine Funktionalität enthält, welche ausgewählt ist aus der Gruppe bestehend aus Sulfonatgruppen, Carboxylgruppen, Chelatbildnern, und Mischungen hiervon.

**27.** Verfahren gemäss einem der Ansprüche 15 bis 26,

**dadurch gekennzeichnet, dass** das Trägerharz mit wenigstens einem Propfungsreagenz funktionalisiert wird, welches wenigstens eine Vinylgruppe enthält, und/oder welches mindestens eine Funktionalität enthält, welche ausgewählt ist aus der Gruppe bestehend aus insbesondere quartären Ammoniumgruppen, Sulfoniumgruppen, Phosphoniumgruppen, Arsoniumgruppen und Mischungen hiervon.

**28.** Verfahren gemäss einem der Ansprüche 15 bis 27,
**dadurch gekennzeichnet, dass** die Pfropfpolymerisation derart kontrolliert wird, dass eine Ionenaustauskapazität, insbesondere eine Kationenaustauschkapazität des funktionalisierten Trägerharzes von 1-250 pEquiv/g erreicht wird, vorzugsweise 3-70 pEquiv/g, besonders bevorzugt 5-50 μEquiv/g.

**29.** Verwendung von tensidartigen Pfropfungsreagenzien, insbesondere umfassend eine Ionenaustauschgruppe, zur Funktionalisierung eines Trägerharzes eines Ionentauschmaterials mit Ionenaustauschgruppen.

**30.** Ionenaustauschersäule, umfassend ein Ionenaustauschmaterial gemäss einem der Ansprüche 1 bis 14, und/oder erhältlich mit einem Verfahren gemäss einem der Ansprüche 15 bis 28.

Fig. 1:

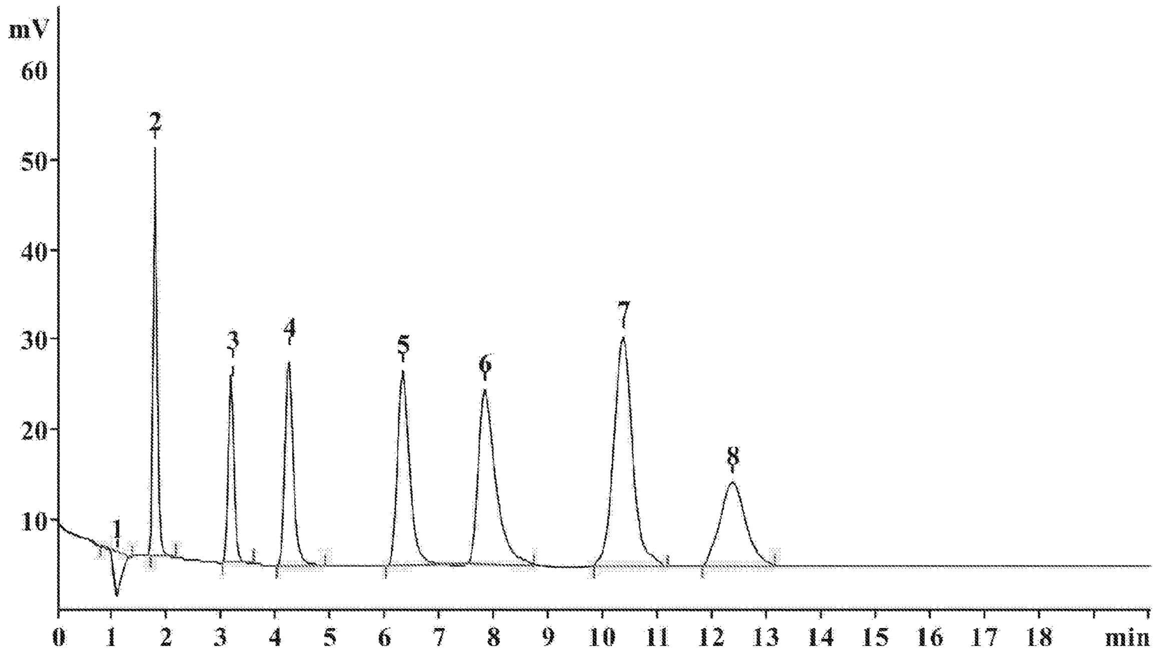
mV
60
50
40
30
20
10
1
2
3
4
5
6
7
8
0 1 2 3 4 5 6 7 8 9 10 11 12 13 14 15 16 17 18 min

Fig. 2:

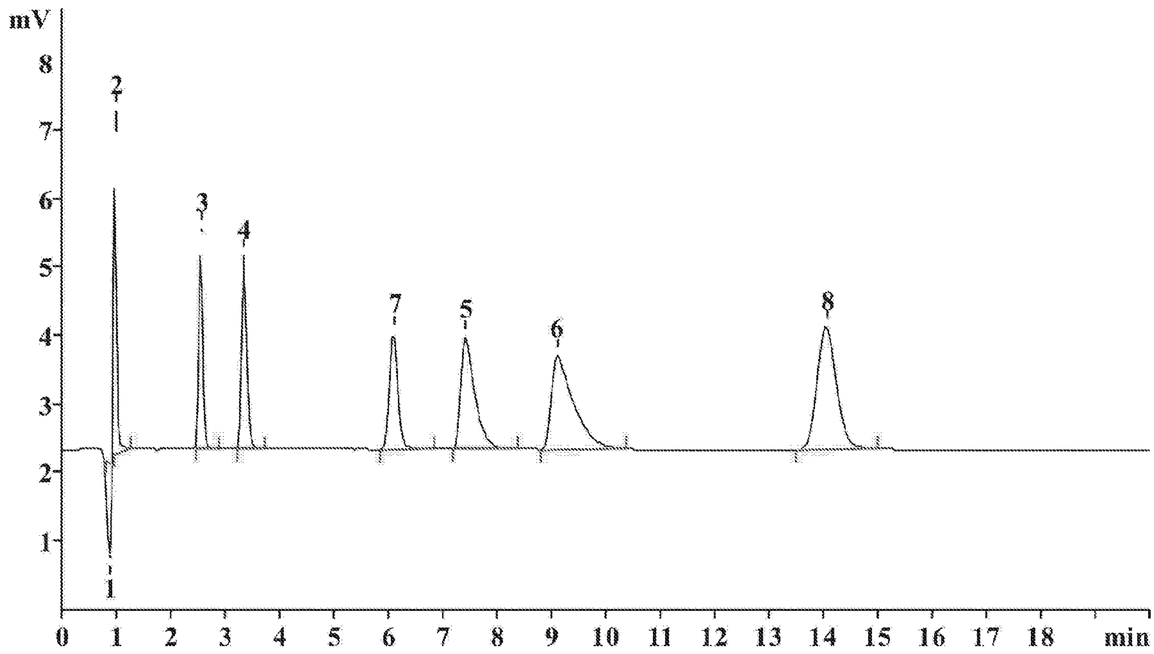
mV
8
7
6
5
4
3
2
1
2
3
4
7
5
6
8
1
0 1 2 3 4 5 6 7 8 9 10 11 12 13 14 15 16 17 18 min

Fig. 3:

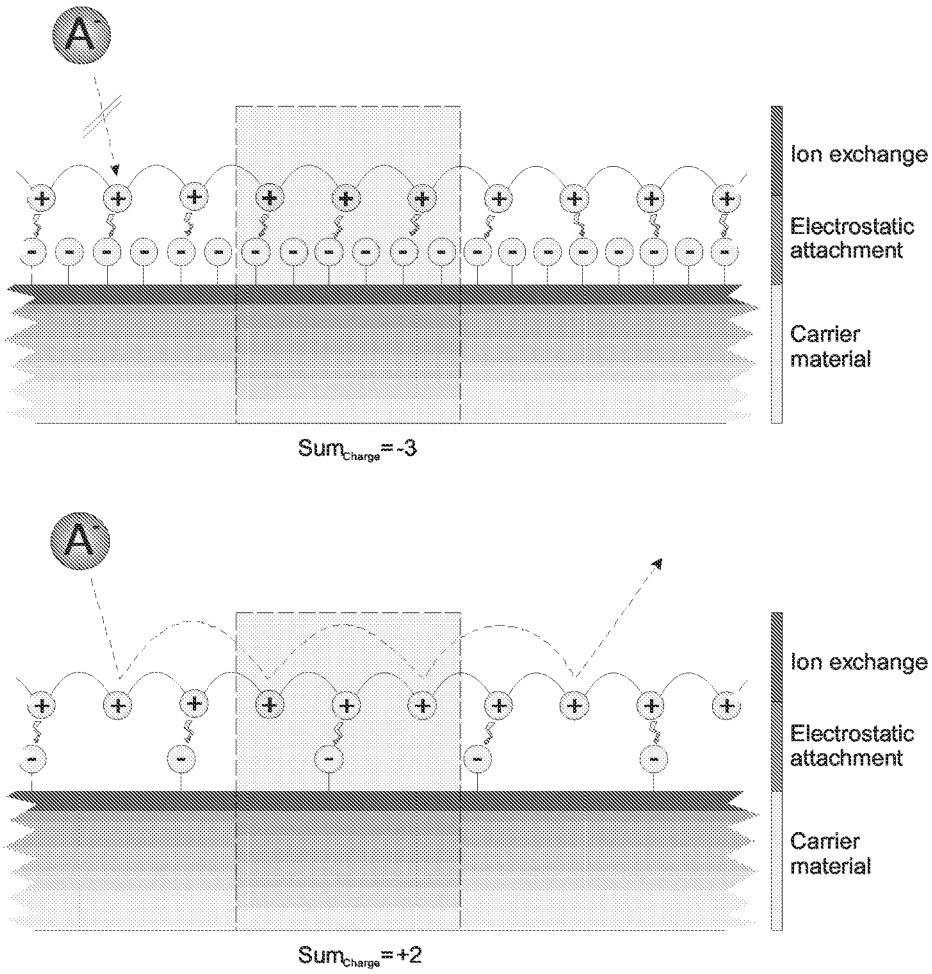
A
Ion exchange
Electrostatic attachment
Carrier material
$Sum_{Charge}$=-3
A
Ion exchange
Electrostatic attachment
Carrier material
$Sum_{Charge}$=+2

Fig. 4:

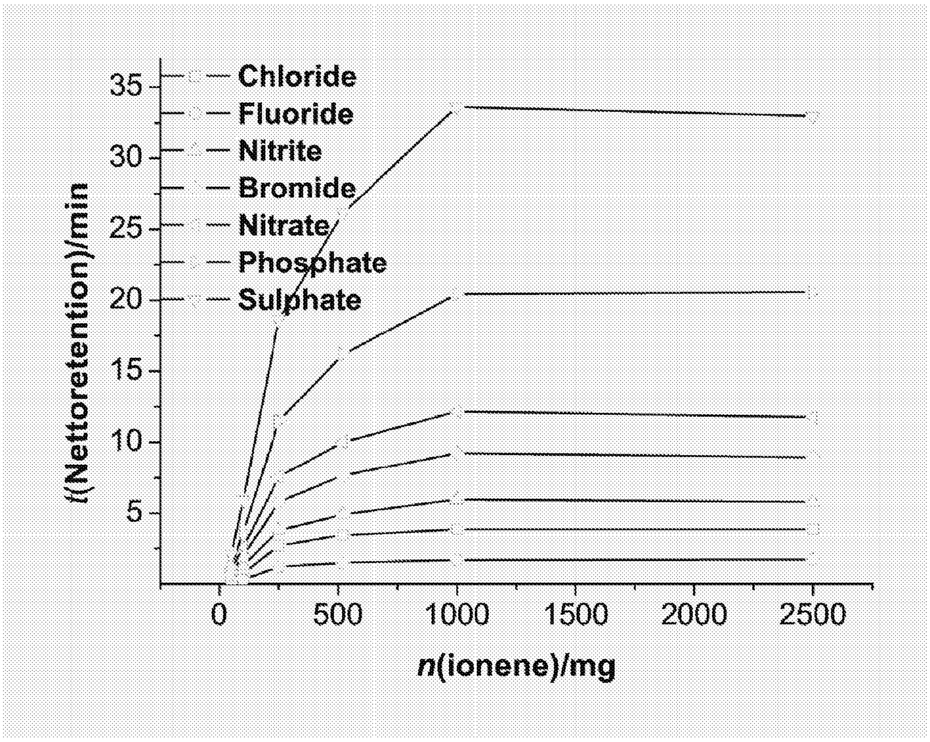

Chloride
Fluoride
Nitrite
Bromide
Nitrate
Phosphate
Sulphate
t(Nettoretention)/min
n(ionene)/mg


Fig. 5:

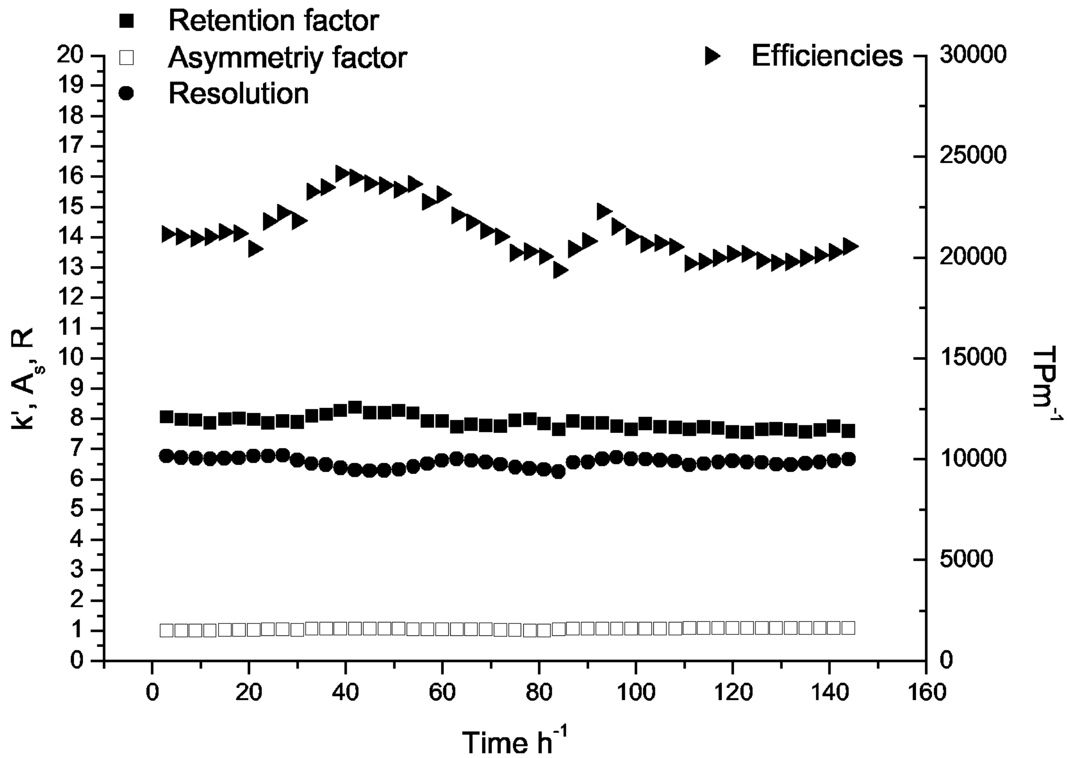

Retention factor
Asymmetriy factor
Resolution
Efficiencies
k', A_s, R
TPm^-1
Time h^-1

Europäisches Patentamt

# EUROPÄISCHER RECHERCHENBERICHT

Nummer der Anmeldung
EP 06 11 2215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 02/18464 A2 (MALLINCKRODT INC [US]) 7. März 2002 (2002-03-07)<br>* Seite 13; Beispiele 11,12 *<br>* Seite 3, Zeile 14 - Zeile 28 *<br>* Seite 6, Zeile 28 - Zeile 31 *<br>* Seite 17, Zeile 17 - Zeile 18; Ansprüche 39,45,46 *<br>----- | 1-8, 15-23, 26-30 | INV.<br>B01J47/00<br>B01J39/20<br>B01J41/14<br>B01D15/36 |
| X | US 3 290 415 A (DAVID TANNER) 6. Dezember 1966 (1966-12-06)<br>* Spalte 5, Zeile 36 - Zeile 37 *<br>* Spalte 5, Zeile 29 *<br>* Spalte 6, Zeile 26 *<br>* Spalte 7, Zeile 34 - Zeile 61 *<br>* Spalte 7, Zeile 24 - Zeile 27 *<br>* Spalte 11, Zeile 9 - Zeile 19 *<br>* Ansprüche 2,13,14 *<br>* Spalte 6, Zeile 45 - Zeile 47 *<br>* Spalte 11, Zeile 53 - Zeile 55 *<br>----- | 1-5,7, 15, 17-23, 26,29 | RECHERCHIERTE SACHGEBIETE (IPC) |
| X | WO 2004/106622 A (EBARA CORP [JP]) 9. Dezember 2004 (2004-12-09)<br>* Seite 15, Zeile 9 - Zeile 12 *<br>* Seite 15, Zeile 5 *<br>* Seite 4, Zeile 7 - Zeile 10 *<br>----- | 1-4,7, 15, 17-20, 22,23, 26,29 | B01J<br>B01D |
| X | US 5 648 400 A (SUGO TAKANOBU) 15. Juli 1997 (1997-07-15)<br>* Spalte 5, Zeile 63 - Spalte 6, Zeile 4 *<br>-----<br>-/-- | 1-4,7, 15, 17-20, 22,23, 26,27,29 | |

Der vorliegende Recherchenbericht wurde für alle Patentansprüche erstellt

| Recherchenort | Abschlußdatum der Recherche | Prüfer |
|---|---|---|
| Den Haag | 15. November 2006 | Hilgenga, Klaas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03) 4

Europäisches Patentamt

# EUROPÄISCHER RECHERCHENBERICHT

Nummer der Anmeldung
EP 06 11 2215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 4 101 460 A (SMALL HAMISH ET AL) 18. Juli 1978 (1978-07-18) * Ansprüche 1,12,1 * ----- | 9,10,24, 25 | |
| D,A | EP 0 883 574 B1 (DIONEX CORP [US]) 2. Januar 2004 (2004-01-02) * Absatz [0027]; Anspruch 3 * ----- | 9,10,24, 25 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 15. November 2006 | Hilgenga, Klaas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

4

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 06 11 2215

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2006

| Im Recherchenbericht angeführtes Patentdokument | Datum der Veröffentlichung | Mitglied(er) der Patentfamilie | Datum der Veröffentlichung |
|---|---|---|---|
| WO 0218464 A2 | 07-03-2002 | AT 332320 T | 15-07-2006 |
| | | AU 8515201 A | 13-03-2002 |
| | | BR 0113541 A | 15-07-2003 |
| | | CA 2420683 A1 | 07-03-2002 |
| | | CN 1449416 A | 15-10-2003 |
| | | CZ 20030462 A3 | 13-08-2003 |
| | | DK 1313781 T3 | 30-10-2006 |
| | | EP 1313781 A2 | 28-05-2003 |
| | | HU 0301684 A2 | 28-08-2003 |
| | | JP 2004507594 T | 11-03-2004 |
| | | MX PA03001677 A | 01-11-2004 |
| | | NO 20030923 A | 27-02-2003 |
| | | NZ 523914 A | 27-02-2004 |
| US 3290415 A | 06-12-1966 | KEINE | |
| WO 2004106622 A | 09-12-2004 | EP 1627104 A1 | 22-02-2006 |
| | | JP 2005008855 A | 13-01-2005 |
| | | KR 20060012647 A | 08-02-2006 |
| US 5648400 A | 15-07-1997 | KEINE | |
| US 4101460 A | 18-07-1978 | AU 7371774 A | 01-04-1976 |
| | | CA 1025598 A1 | 31-01-1978 |
| | | DE 2446375 A1 | 03-04-1975 |
| | | FR 2246302 A1 | 02-05-1975 |
| | | GB 1471729 A | 27-04-1977 |
| | | JP 1186207 C | 20-01-1984 |
| | | JP 50077290 A | 24-06-1975 |
| | | JP 58017659 B | 08-04-1983 |
| EP 0883574 B1 | 02-01-2004 | AT 257127 T | 15-01-2004 |
| | | AU 723702 B2 | 07-09-2000 |
| | | AU 1956997 A | 16-09-1997 |
| | | CA 2247945 A1 | 04-09-1997 |
| | | DE 69727048 D1 | 05-02-2004 |
| | | DE 69727048 T2 | 11-11-2004 |
| | | EP 0883574 A1 | 16-12-1998 |
| | | JP 2000506063 T | 23-05-2000 |
| | | WO 9731864 A1 | 04-09-1997 |
| | | US 6248798 B1 | 19-06-2001 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5324752 A
- EP 883574 A


### In der Beschreibung aufgeführte Nicht-Patentliteratur


- **PIROGOV et al.** *Journal of Chromatography A,* 1999, vol. 850, 53-63
- **PIROGOV et al.** *Journal of Chromatography A,* 2000, vol. 884, 31-39
- **PIROGOV et al.** *Journal of Chromatography A,* 2001, vol. 916, 51-59
- **KROKHIN et al.** *Journal of Analytical Chemistry,* 2002, vol. 10 (57), 920-927